(19) **Europäisches Patentamt / European Patent Office / Office européen des brevets**

(11) **EP 2 006 949 A2**

(12) **EUROPEAN PATENT APPLICATION**
published in accordance with Art. 153(4) EPC

(43) Date of publication:
**24.12.2008 Bulletin 2008/52**

(51) Int Cl.:
**H01M 14/00** $^{(2006.01)}$     **H01L 31/04** $^{(2006.01)}$

(21) Application number: **07737690.3**

(22) Date of filing: **02.03.2007**

(86) International application number:
**PCT/JP2007/054042**

(87) International publication number:
**WO 2007/100095 (07.09.2007 Gazette 2007/36)**

(84) Designated Contracting States:
**DE FR GB**

(30) Priority: **02.03.2006 JP 2006056422**

(71) Applicant: **Tokyo University of Science, Educational Foundation Tokyo 162-8601 (JP)**

(72) Inventors:
- **ARAKAWA, Hironoric/o Tokyo University of S. Tokyo;1628601 (JP)**
- **YAMAGUCHI, Takeshi Tokyo;1628601 (JP)**

(74) Representative: **Grünecker, Kinkeldey, Stockmair & Schwanhäusser Anwaltssozietät Leopoldstrasse 4 80802 München (DE)**

(54) **METHOD FOR PRODUCING PHOTOELECTRODE FOR DYE-SENSITIZED SOLAR CELL, PHOTOELECTRODE FOR DYE-SENSITIZED SOLAR CELL, AND DYE-SENSITIZED SOLAR CELL**

(57)     The invention provides a photoelectrode for dye-sensitized solar cell, by which a dye-sensitized solar cell capable of obtaining a high photoelectric conversion efficiency even when a plastic base is used as a transparent base forming a transparent substrate, and retaining a high level of photoelectric conversion efficiency even when the quantity of incident light is changed can be surely obtained with good reproducibility, a production process thereof, and a dye-sensitized solar cell.

The production process comprises forming a transparent conductive layer on a transparent base to provide a transparent substrate and laminating a photoelectric conversion layer on the transparent conductive layer of the transparent substrate, wherein the photoelectric conversion layer contains at least two kinds of semiconductor particles different in average particle diameter from each other and a sensitizing dye, and the process comprises a step of subjecting a coating film formed on the transparent conductive layer with an aqueous paste containing neither a binder nor an organic solvent and containing said at least two kinds of semiconductor particles different in average particle diameter to a pressing treatment.

Fig. 2

## Description

TECHNICAL FIELD

The present invention relates to a production process of a photoelectrode for dye-sensitized solar cell, a photoelectrode for dye-sensitized solar cell and a dye-sensitized solar cell.

BACKGROUND ART

Serious problems encountered by the human society in the 21th century include global warming and exhaustion of fossil fuels by heavy energy consumption since the Industrial Revolution. There is thus a demand for development of clean and reproducible energy using no fossil fuel and exhausting no carbon dioxide. Examples of such clean and reproducible energy include hydraulic power, wind power, geothermy and wave power. However, attention is attracted to solar energy capable of surely obtaining fixed energy irrespective of place as one of reproducible energy sources having a greatest future.
Among energy techniques using sunrays, a solar cell is most widely used and has been in a stage of practical use over several years. However, this promising technique has not come to be generally spread because of its comparatively high production cost. Development of a solar cell low in cost is essential conditions for great introduction of clean energy by solar photovoltaic power generation. As such a solar cell producible at low cost, a dye-sensitized solar cell generally called Graetzel cell has been proposed (see, for example, Non-Patent Art. 1) .

Specifically, this dye-sensitized solar cell has a photoelectrode composed of a transparent substrate with a transparent conductive layer formed on a transparent base and a photoelectric conversion layer formed on this transparent conductive layer by carrying a sensitizing dye on semiconductor particles such as titania particles, and a counter electrode electrically connected to this photoelectrode, and an electrolyte solution is interposed between these photoelectrode and counter electrode.
This dye-sensitized solar cell has photoelectric conversion capability equal to or more than a silicon solar cell heretofore in use, and further has advantages that it can be mass-produced at low cost because it can be produced by a printing system or flow production system under atmospheric pressure, and an expensive equipment is unnecessary, in addition to less resource constraint than the conventional silicon solar cell with respect to titanium oxide and the sensitizing dye that are materials, the component of the electrolyte solution, etc.

As a materials of the transparent base of the transparent substrate conventionally used in the dye-sensitized solar cell, may be mentioned glass. In a dye-sensitized solar cell using glass as the transparent base, a pure oxide semiconductor film is generally formed by, for example, applying a paste composed of nano particles of titania containing an organic binder on to a conductive glass substrate and calcining the paste at a temperature of 400°C or higher, thereby burning the organic binder. The photoelectric conversion efficiency of such a dye-sensitized solar cell is about 8%, and about 11% on the maximum.
On the other hand, in recent years, attention has been attracted to the use of a plastic substrate, whose transparent base is a plastic plate or plastic film, as the transparent substrate, and an investigation has been carried out thereon. The reason is that weight saving and cost reduction can be made, and the resulting solar cell is expected to be, for example, placeable on a roof or applicable to a curved surface such as a car body, or used as a power source of a potable telephone because the plastic substrate has merits of being tough and flexible.
However, the plastic substrate is low in heat resistance, and so the process generally used in the case of the glass substrate such as calcination at a temperature of 400°C or higher may not be applied to the plastic substrate as it is. As a result, there has been a problem that a dye-sensitized solar cell capable of achieving a sufficient photoelectric conversion efficiency cannot be formed.
In order to solve this problem, a pressing method, a migration electrodeposition method, a hydrothermal synthesis method, a microwave heating method and the like have been proposed as methods for forming a photoelectric conversion layer at a low temperature of about 150°C. However, even when any method is used, the dye-sensitized solar cell using the plastic substrate cannot surpass the dye-sensitized solar cell using the glass substrate in photoelectric conversion capability.

In order to form a photoelectric conversion layer on a plastic substrate aiming at a dye-sensitized solar cell high in photoelectric conversion capability, a paste containing semiconductor particles and a binder is generally used (see, for example, Patent Arts. 1 to 3). This binder is used for the purpose of improving coating ability on the transparent substrate to make the adhesion between the transparent substrate and the semiconductor particles good and increasing the durability of the resulting dye-sensitized solar cell.

However, the paste containing the binder is prepared by using a solvent for dissolving the binder. Such a solvent is often an organic solvent, and so there is a problem that the plastic material species used as the transparent base are limited.

For example, Patent Art. 2 discloses a dye-sensitized solar cell with a photoelectric conversion layer formed by applying a paste containing a binder, in which one kind of fine semiconductor particles, on which a sensitizing dye has been carried in advance, are dispersed, on to a conductive PET substrate (transparent substrate) and then subjecting the paste to a pressing treatment.

However, it is considered that in this pressing treatment, the application of a high pressure of about 1,000 MPa for the purpose of, for example, improving the adhesion between the conductive PET substrate and the fine semiconductor particles causes problems of breaking of a conductive film of the conductive PET substrate and distortion of the conductive PET substrate itself.

In addition, in the photoelectric conversion layer formed by using the fine semiconductor particles, on which the sensitizing dye has been carried in advance, the sensitizing dye on the surfaces of the fine semiconductor particles directly receiving a pressing pressure by the pressing treatment is separated, and contact between the fine semiconductor particles is prevented by the sensitizing dye to inhibit electron transfer. As a result, it is considered that the resulting dye-sensitized solar cell becomes low in performance.

Further, the dye-sensitized solar cell produced by using the binder in such a manner has been proved to be low in photoelectric conversion efficiency. The reason for this is presumed to be attributable to the fact that the binder is entered into between the fine semiconductor particles and between the fine semiconductor particles and the transparent substrate to prevent the junction or contact thereof, thereby inhibiting electron transfer.

At present, there is no report to the effect that a dye-sensitized solar cell using a plastic substrate, which achieves a high photoelectric conversion efficiency equal to or more than a dye-sensitized solar cell using a glass substrate, has been able to be stably produced with good reproducibility.

As a dye-sensitized solar cell using a plastic substrate, a solar cell that can retain a high level of photoelectric conversion efficiency even when the quantity of incident light is changed is expected. However, such a solar cell has not been yet obtained under the circumstances.

Non-Patent Art. 1: Nature, 353, pp. 737-740, 1991

Patent Art. 1: Japanese Patent Application Laid-Open No. 2006-19072

Patent Art. 2: Japanese Patent Application Laid-Open No. 2004-214129

Patent Art. 3: International Publication No. 2003/107471, pamphlet

DISCLOSURE OF THE INVENTION

The present invention has been made in view of the foregoing circumstances and has as its object the provision of a photoelectrode for dye-sensitized solar cell, by which a dye-sensitized solar cell capable of obtaining a high photoelectric conversion efficiency even when a plastic substrate is used as a transparent substrate, and retaining a high level of photoelectric conversion efficiency even when the quantity of incident light is changed can be surely obtained with good reproducibility, a production process thereof, and a dye-sensitized solar cell obtained by this photoelectrode for dye-sensitized solar cell.

The present inventors have carried out an extensive investigation with a view toward achieving the above object. As a result, it has been found that an aqueous paste containing semiconductor particles and water and containing neither a binder nor an organic solvent is used, and a coating film formed by applying this paste on to a transparent substrate and drying the paste is subjected to a pressing treatment, whereby a photoelectric conversion layer can be formed on the transparent substrate with high adhesion to provide a photoelectrode for dye-sensitized solar cell, from which a dye-sensitized solar cell exhibiting a high photoelectric conversion efficiency can be obtained, and this photoelectrode is particularly effective in the case where a plastic substrate is used as a transparent substrate, and thus the present invention has been completed.

A production process of a photoelectrode for dye-sensitized solar cell according to the present invention is a production process of a photoelectrode for dye-sensitized solar cell, which comprises forming a transparent conductive layer on a transparent base to provide a transparent substrate and laminating a photoelectric conversion layer on the transparent conductive layer of the transparent substrate, wherein

the photoelectric conversion layer contains at least two kinds of semiconductor particles different in average particle diameter from each other and a sensitizing dye, and

the process comprises a step of subjecting a coating film formed on the transparent conductive layer with an aqueous paste containing neither a binder nor an organic solvent and containing said at least two kinds of semiconductor particles different in average particle diameter to a pressing treatment.

In the production process of the photoelectrode for dye-sensitized solar cell according to the present invention, the surface of the transparent conductive layer of the transparent substrate may preferably be subjected to an ultrasonic cleaning treatment, an etching treatment and/or an UV-ozone treatment.

In the production process of the photoelectrode for dye-sensitized solar cell according to the present invention, the photoelectric conversion layer may be obtained by subjecting the coating film of the aqueous paste to the pressing treatment to provide a functional semiconductor layer and carrying the sensitizing dye on the functional semiconductor layer.

In the production process of the photoelectrode for dye-sensitized solar cell according to the present invention, the pressing treatment may preferably be conducted under conditions that the light transmittance of the functional semiconductor layer at a wavelength of 400 to 800 nm reaches 110 to 130% of a value before the pressing treatment.

In the production process of the photoelectrode for dye-sensitized solar cell according to the present invention, the photoelectric conversion layer may be obtained by forming one or more coating layers of an aqueous paste containing neither a binder nor an organic solvent and containing at least two kinds of semiconductor particles different in average particle diameter from each other on the layer obtained by subjecting the coating film of the aqueous paste to the dressing treatment to provide a functional semiconductor layer and carrying the sensitizing dye on the functional semiconductor layer.

In this production process of the photoelectrode for dye-sensitized solar cell, the pressing treatment may preferably be conducted under conditions that the light transmittance of the layer obtained by subjecting the coating film of the aqueous paste to the pressing treatment at a wavelength of 400 to 800 nm reaches 110 to 130% of a value before the pressing treatment.

In the production process of the photoelectrode for dye-sensitized solar cell according to the present invention, the functional semiconductor layer obtained through the step of subjecting the coating film of the aqueous paste to the pressing treatment may preferably be subjected to an UV-ozone treatment before carrying the sensitizing dye.

In the production process of the photoelectrode for dye-sensitized solar cell according to the present invention, the photoelectric conversion layer may be composed of a sensitizing dye-carried and pressed semiconductor layer obtained by carrying the sensitizing dye on the coating film of the aqueous paste and then conducting the pressing treatment.

In this production process of the photoelectrode for dye-sensitized solar cell, the pressing treatment may preferably be conducted under conditions that the light transmittance of the sensitizing dye-carried and pressed semiconductor layer at a wavelength of 400 to 800 nm reaches 110 to 130% of a value before the pressing treatment.

In the production process of the photoelectrode for dye-sensitized solar cell according to the present invention, the semiconductor particles may preferably be anatase crystal type titania particles.

In the production process of the photoelectrode for dye-sensitized solar cell according to the present invention, the semiconductor particles may preferably be obtained by a basic process.

In the production process of the photoelectrode for dye-sensitized solar cell according to the present invention, the basic process may preferably comprise a step of hydrolyzing a semiconductor metal alkoxide with a quaternary ammonium salt.

In the production process of the photoelectrode for dye-sensitized solar cell according to the present invention, the content of said at least two kinds of semiconductor particles different in average particle diameter in the aqueous paste may preferably be 5 to 30% by mass.

In the production process of the photoelectrode for dye-sensitized solar cell according to the present invention, the semiconductor particles contained in the aqueous paste may be two kinds of particles having an average particle diameter of 3 to 40 nm and an average particle diameter of 50 nm or greater.

In the production process of the photoelectrode for dye-sensitized solar cell according to the present invention, the pressing treatment may preferably be conducted at room temperature, and the pressing treatment may preferably be conducted under a pressure of from 5 MPa or higher to 500 MPa or lower.

In the production process of the photoelectrode for dye-sensitized solar cell according to the present invention, the transparent base of the transparent substrate may be a plastic transparent base.

In this production process of the photoelectrode for dye-sensitized solar cell according to the present invention, a transparent conductive layer composed of indium-tin composite oxide (ITO) may preferably be formed on the plastic transparent base by a sputtering method while conducting a heat treatment at a temperature lower than the heat-resistant temperature of the transparent base.

A photoelectrode for dye-sensitized solar cell according to the present invention is a photoelectrode for dye-sensitized solar cell, which is obtained by forming a transparent conductive layer on a transparent base to provide a transparent substrate, providing a functional semiconductor layer on the transparent conductive layer of the transparent substrate, and carrying a sensitizing dye on the functional semiconductor layer of the thus-obtained photoelectrode structure, wherein

the functional semiconductor layer has a pressed layer in a state contacted with the transparent conductive layer, and the pressed layer contains at least two kinds of semiconductor particles different in average particle diameter from each other and contains no binder.

In the photoelectrode for dye-sensitized solar cell according to the present invention, said at least two kinds of semiconductor particles may preferably be two kinds of semiconductor particles having an average particle diameter of 3 to 40 nm and an average particle diameter of 50 nm or greater.

In the photoelectrode for dye-sensitized solar cell according to the present invention, the content of the semiconductor particles having the average particle diameter of 3 to 40 nm in said at least two kinds of semiconductor particles different in average particle diameter may preferably be 50 to 95% by mass.

In the photoelectrode for dye-sensitized solar cell according to the present invention, the functional semiconductor layer of the photoelectrode structure may be of a multilayer structure of the pressed layer and at least one layer laminated on the pressed layer, containing at least two kinds of semiconductor particles different in average particle diameter from each other, containing no binder and subjected to no pressing treatment.

In the photoelectrode for dye-sensitized solar cell according to the present invention, the thickness of the pressed layer of the functional semiconductor layer may preferably be 3 to 40 $\mu$m.

In the photoelectrode for dye-sensitized solar cell according to the present invention, the pressed layer of the functional semiconductor layer may bear traces of cracks filled.

In the photoelectrode for dye-sensitized solar cell according to the present invention, the light transmittances of a laminate of the transparent substrate and the pressed layer of the functional semiconductor layer in the photoelectrode structure at a wavelength of 500 nm and at a wavelength of 700 nm may preferably be 20 to 65% and 30 to 75%, respectively.

A dye-sensitized solar cell according to the present invention comprises the above-described photoelectrode for dye-sensitized solar cell, wherein the photoelectrode for dye-sensitized solar cell is provided so as to oppose to a counter electrode through an electrolyte part.

According to the production process of the photoelectrode for dye-sensitized solar cell of the present invention, at least two kinds of specific semiconductor particles different in average particle diameter are caused to be contained in the photoelectric conversion layer, so that a high light absorption efficiency by the so-called light confinement effect can be achieved as to the sensitizing dye contained in the photoelectric conversion layer.

According to the production process of the present invention, since this photoelectric conversion layer is formed by using the specific aqueous paste by means of the specific process that the coating film thereof is subjected to the pressing treatment, the semiconductor particles are closely bonded to one another by the pressing treatment, and when the transparent substrate is a plastic substrate, the semiconductor particles are caused to closely adhere to the transparent conductive layer of the transparent substrate by the flexibility thereof so as to cut into the surface of the transparent conductive layer, and moreover no binder is interposed between the semiconductor particles and between the semiconductor particles and the surface of the transparent conductive layer, so that an extremely good electron flow is achieved, and consequently a dye-sensitized solar cell having good performance can be obtained.

In other words, for example, even when a plastic substrate, which has heretofore been difficult to achieve a high light absorption efficiency, is used, the photoelectric conversion layer can be formed on the transparent substrate with high adhesion. As a result, even when the plastic substrate is used, a photoelectrode for dye-sensitized solar cell, by which a dye-sensitized solar cell capable of retaining a high level of photoelectric conversion efficiency even when the quantity of incident light is changed can be provided, can be surely obtained with good reproducibility.

In addition, the production process according to the present invention have such advantages that the operation can be simply advanced, and heating is scarcely required because the process can be performed under room-temperature conditions, production const is reduced because materials to be used are a little compared with the conventional production processes, the process is excellent in environmental protection because no organic solvent is used, and energy is saved because a low pressure suffices for the pressing treatment.

According to the photoelectrode for dye-sensitized solar cell of the present invention, a dye-sensitized solar cell capable of retaining a high level of photoelectric conversion efficiency even when the quantity of incident light is changed can be provided even when the plastic substrate is used as the transparent substrate.

As an example of properties of the dye-sensitized solar cell using the plastic substrate as the transparent substrate, a high level of photoelectric conversion efficiency of 6.9 to 7.4% is retained with little variation when the quantity of incident light is changed within a range of, for example, from 20 to 170 mW/cm$^2$.

BRIEF DESCRIPTION OF THE DRAWINGS

[FIG. 1] is a cross-sectional view illustrating the construction of a cell making up a dye-sensitized solar cell according to an embodiment of the present invention.

[FIG. 2] is a cross-sectional view illustrating a process for producing a photoelectrode for dye-sensitized solar cell according to an embodiment of the present invention.

[FIG. 3] is a cross-sectional view illustrating the construction of a cell making up a dye-sensitized solar cell according to another embodiment of the present invention.

[FIG. 4] is a cross-sectional view illustrating a process for producing a photoelectrode for dye-sensitized solar cell according to another embodiment of the present invention.

[FIG. 5] diagrammatically illustrates the results of Example 1.

DESCRIPTION OF CHARACTERS

| | |
|---|---|
| 10, 10A | Photoelectric conversion elements |
| 12 | Electrolyte part |
| 16 | Counter electrode |
| 17 | Connection |
| 20, 20A | Photoelectrodes |
| 20K, 20L | Photoelectrode structures |
| 21 | Transparent substrate |
| 21a | Transparent base |
| 21b | Transparent conductive layer |
| 23, 26 | Photoelectric conversion layers |
| 23A | Coating film |
| 23B | Layer |
| 23C | Coating film |
| 23$\alpha$, 23$\beta$ | Functional semiconductor layers |
| 25 | Light scattering layer |

BEST MODE FOR CARRYING OUT THE INVENTION

The present invention will hereinafter be described specifically.

<First embodiment>

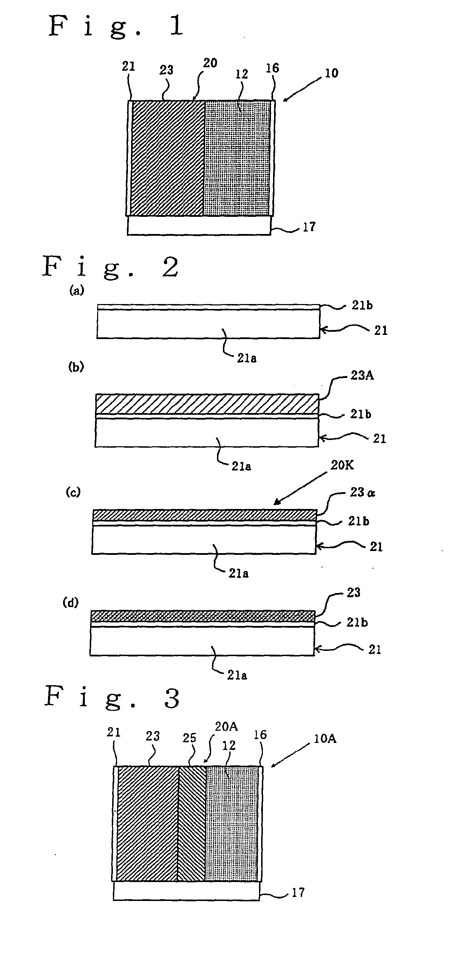

FIG. 1 is a cross-sectional view illustrating the construction of a cell making up a dye-sensitized solar cell according to an embodiment of the present invention.

[Photoelectric conversion element]

In the cell (hereinafter also referred to as "photoelectric conversion element") 10 making up this dye-sensitized solar cell, a photoelectrode for dye-sensitized solar cell (hereinafter also referred to as "photoelectrode" merely) 20 with a photoelectric conversion layer 23 formed on a transparent substrate 21, and a counter electrode 16 with a conductive layer (not illustrated) composed of, for example, platinum formed on a transparent substrate (not illustrated) are arranged in such a manner that these photoelectric conversion layer 23 and conductive layer oppose to each other through an electrolyte part 12.

The photoelectrode 20 acts as a negative electrode and is specifically equipped with the transparent substrate 21 having a transparent conductive layer 21b (see FIG. 2(a)) and the photoelectric conversion layer 23 provided on the transparent conductive layer 21b of this transparent substrate 21 by lamination.

[Photoelectric conversion layer]

The photoelectric conversion layer 23 contains at least two kinds of semiconductor particles (hereinafter referred to as "group of specific semiconductor particles") different in average particle diameter from each other and a sensitizing dye and has been subjected to a pressing treatment. Specifically, the photoelectric conversion layer is obtained by carrying the sensitizing dye on a functional semiconductor layer 23$\alpha$ obtained by subjecting a coating film 23A (see FIG. 2(b)) of an aqueous paste containing neither a bonder nor an organic solvent, and containing the group of the specific semiconductor particles to the pressing treatment.

The photoelectric conversion layer 23 has the functional semiconductor layer 23$\alpha$ subjected to the pressing treatment, whereby the functional semiconductor layer 23$\alpha$ can be provided as a layer in which a great number of nanopores have been formed, so that the proportion of a surface area of the semiconductor particles per unit area of the transparent substrate 21 becomes extremely high, whereby a sufficient amount of the sensitizing dye can be carried, and a high light absorption efficiency is obtained after all.

The photoelectric conversion layer 23 contains two or more kinds of semiconductor particles different in average particle diameter, whereby though nano-sized semiconductor particles having an average particle diameter of, for example, about 20 nm tends to transmit light of a long wavelength, the light is scattered by the presence of large semiconductor particles having an average particle diameter of, for example, about 100 nm to increase an optical path length in the functional semiconductor layer $23\alpha$, and so the so-called light confinement effect can be sufficiently achieved. As a result, a sufficient light absorption efficiency can be achieved as to the sensitizing dye, and thus a high photoelectric conversion efficiency is achieved in the resulting dye-sensitized solar cell.

In this photoelectric conversion element 10, the light transmittance of a photoelectrode structure 20K (see FIG. 2(c)) with the transparent conductive layer 21b and the functional semiconductor layer $23\alpha$ provided on the transparent base 21a in this order at a wavelength of 500 nm is preferably 30 to 75%.

If this light transmittance is too high, there is a possibility that a sufficient light absorption efficiency may not be achieved in the photoelectrode because light is transmitted without causing internal scattering. If the light transmittance is too low on the other hand, there is a possibility that light may not be incident into the photoelectrode because surface reflection is caused.

[Semiconductor particles]

The semiconductor particles serve to exhibit an electron transferring action. Specific examples of semiconductors forming such semiconductor particles include oxide semiconductors such as $TiO_2$, SnO, ZnO, $WO_3$, $Nb_2O_5$, $In_2O_3$, $ZrO_2$, $Ta_2O_5$ and $TiSrO_3$; sulfide semiconductors such as CdS, ZnS, $In_2S$, PbS, $Mo_2S$, $WS_2$, $Sb_2S_3$, $Bi_2S_3$, $ZnCdS_2$ and $CuS_2$; metal chalcogenides such as CdSe, $In_2Se_2$, $Wse_2$, PbSe and CdTe; and element semiconductors such as GaAs, Si and InP, and complexes composed of two or more semiconductors thereof, for example, a complex of SnO and ZnO and a complex of $TiO_2$ and $Nb_2O_5$, may also be used. The kind of the semiconductor is not limited thereto, and two or more semiconductors thereof may be used in combination.

Among the above semiconductors, oxides of Ti, Zn, Sn and Nb are preferred as the semiconductor forming the semiconductor particles, with $TiO_2$ being particularly preferred.

Titania particles formed of $TiO_2$ include anatase crystal type titania particles and rutile crystal type titania particles, and both particles may be used. However, when the anatase crystal type titania particles are used, the expected performance is surely achieved in a dye-sensitized solar cell using a transparent base formed of a plastic film.

Two or more kinds of semiconductor particles different in average particle diameter included in the group of specific semiconductor particles may be the same kinds or different kinds from each other, but are preferably the same kinds.

Titania particles are preferably used as the semiconductor particles.

The average particle diameter of semiconductor particles (hereinafter also referred to as "small semiconductor particles") having a small average particle diameter among the semiconductor particles making up the group of specific semiconductor particles is preferably 3 to 40 nm, more preferably 15 to 25 nm. Semiconductor particles (hereinafter also referred to as "large semiconductor particles") having a large average particle diameter among the semiconductor particles making up the group of specific semiconductor particles have light scattering ability, and the average particle diameter thereof is preferably 50 nm or more, more preferably 80 to 400 nm, particularly preferably 90 to 120 nm.

The proportion of the small semiconductor particles contained in the group of specific semiconductor particles making up the photoelectric conversion layer 23 is preferably 50 to 95% by mass, more preferably 60 to 70% by mass. If the proportion of the small semiconductor particles is too high, the sufficient light confinement effect by the semiconductor particles cannot be achieved, and a high light absorption efficiency cannot be achieved as to the sensitizing dye. If the proportion of the small semiconductor particles is too low on the other hand, photoelectric conversion capability is not sufficiently achieved.

The thickness of the functional semiconductor layer $23\alpha$ to form the photoelectric conversion layer 23 is preferably 3 to 40 $\mu$m, more preferably 6 to 15 $\mu$m.

If the thickness of the functional semiconductor layer to form the photoelectric conversion layer is too small, such a layer cannot carry a sufficient amount of the sensitizing dye, and so the resulting dye-sensitized solar cell cannot achieve a sufficient photoelectric conversion efficiency. If the thickness of the functional semiconductor layer to form the photoelectric conversion layer is too great on the other hand, a diffusion length of electrons injected from the sensitizing dye in the resulting photoelectric conversion layer is increased, so that energy loss by charge recombination becomes great.

[Sensitizing dye]

No particular limitation is imposed on the sensitizing dye carried on the semiconductor. particles in the photoelectric conversion layer 23 so far as it exhibits a sensitizing action. As examples thereof, may be mentioned Ru complexes such as N3 complex, N719 complex (N719 dye), Ru-terpyridine complex (Black dye) and Ru-diketonate complex; organic dyes such as coumalin dyes, merocyanine dyes and polyene dyes; and metal porphyrin dyes and phthalocyanine dyes. Among these dyes, Ru complexes are preferred, with N719 dye and Black dye being particularly preferred because they have a broad spectrum in a visible light region.

N719 is a compound represented by ($RuL_2(NCS)_2 \cdot 2TBA$), and Black dye is a compound represented by ($RuL'_2 (NCS)_3 \cdot 2TBA$). In the above formulae, L is 4,4'-dicarboxy-2,2-bipyridine, L' is 4,4',4"-tetracarboxy-2,2',2"-terpyridine, and TBA is a tetrabutylammonium cation.

These dyes may be used either singly or in any combination thereof.

The amount of the sensitizing dye carried in the photoelectric conversion layer 23 is controlled to preferably $1 \times 10^{-8}$ to $1 \times 10^{-7}$ mol/cm$^2$, more preferably $3 \times 10^{-8}$ to $7 \times 10^{-8}$ mol/cm$^2$ in terms of an amount per unit area of the functional semiconductor layer $23\alpha$. The amount of the sensitizing dye carried falls within this range, whereby the sensitizing dye is carried as a monomolecular layer on the surfaces of the semiconductor particles, so that a sufficient light absorption efficiency is achieved without causing energy loss such as reduction of an electrolyte in the electrolyte part by electrons excited by the sensitizing dye.

[Transparent substrate] The transparent substrate 21 making up the photoelectric conversion element 10 of this embodiment is such that a transparent conductive layer 21b is formed on a transparent base 21a.

As the transparent base 21a, may be used a base composed of one of various materials such as glass and plastics. As a plastic base, may preferably be used, for example, a plate or film of a cycloolefin polymer, a plate or film of an acrylic urea polymer, a plate or film of a polyester, or a plate or film of polyethylene naphthalate.

The surface resistance of the transparent substrate 21 is preferably 100 Ω/□ or lower, more preferably 15 Ω/□ or lower.

[Transparent conductive layer]

The transparent conductive layer 21b formed on one surface of the transparent base 21a is composed of, for example, indium-tin composite oxide (ITO) or tin oxide (FTO) doped with fluorine.

[Process for forming photoelectric conversion layer]

The photoelectric conversion layer 23 of such a photoelectrode 20 as described above can be produced through the following essential steps (1) to (5) in this order as illustrated in FIG. 2.

(1) A transparent substrate-preparing step of forming a transparent conductive layer 21b on a transparent base 21a to provide a transparent substrate 21, and conducting a surface treatment as needed (see FIG. 2(a));
(2) An aqueous paste-preparing step of preparing an aqueous paste containing conductive particles by a basic process;
(3) A coating film-forming step of applying the aqueous paste on to the transparent conductive layer 21b of the transparent substrate 21 to provide a dried coating film 23A (see FIG. 2(b));
(4) A pressing treatment step of subjecting the coating film 23A formed on the transparent substrate 21 to a pressing treatment to provide a functional conductor layer $23\alpha$ (see FIG. 2(c)); and
(5) A dye-carrying step of carrying a sensitizing dye on the functional conductive layer (see FIG. 2(d)).

[Transparent substrate-preparing step]

The transparent substrate 21 is provided by forming the transparent conductive layer 21b on the transparent base 21a by, for example, a sputtering method.

The formation of the transparent conductive layer 21b is preferably conducted while conducting a heat treatment from the viewpoints of adhesion of the transparent conductive layer 21b to the transparent base 21a and durability.

The temperature of the heat treatment is generally controlled to, for example, 100 to 150°C. When the transparent base 21a forming the transparent substrate 21 is a plastic base, however, the temperature of the heat treatment is controlled to a temperature lower than the heat-resistant temperature of a plastic forming the transparent base 21a.

The term "heat-resistant temperature" used herein means a lower temperature of the softening temperature and melting temperature of the plastic.

[Surface treatment of transparent substrate]

The surface of the transparent substrate 21, i.e., the surface of the transparent conductive layer 21b, may be subjected to a surface treatment by one of surface treatments such as an ultrasonic cleaning treatment, an etching treatment and an UV-ozone treatment or a combination of two or more thereof. The transparent substrate 21 subjected to such a surface treatment provides a dye-sensitized solar cell excellent in photoelectric conversion efficiency.

This reason is considered to be attributable to the fact that wettability upon the application of the aqueous paste on to the transparent substrate 21 and the adhesion of the semiconductor particles to the transparent substrate 21 after the pressing treatment are both improved by the surface treatment. For example, it has been confirmed that the contact angle of the surface of the transparent substrate 21 before the surface treatment is wider than 90°, while the contact angle after the surface treatment is reduced to about 80 to 90°.

With respect to the method of the surface treatment on the transparent substrate 21, any other treatment method such as sputtering may be suitably used in addition to the ultrasonic cleaning treatment, etching treatment and UV-ozone treatment, and the method is not limited thereto.

The ultrasonic cleaning treatment is a treatment for washing and removing minute deposits on the surface of the transparent substrate by using an ultrasonic cleaner and a detergent for ultrasonic cleaning, immersing the transparent substrate in a container, into which the detergent has been put, placing the container in the ultrasonic cleaner filled with water and generating ultrasonic waves for several minutes to 10 minutes.

The etching treatment is conducted by setting the transparent substrate in a high-frequency sputtering apparatus "SVC-700RFII" (manufactured by SANYU ELECTRON CO., LTD.) under high-vacuum conditions (5 Pa) and conducting a reverse-sputtering (etching) treatment under conditions of 20 W and 10 minutes. Specifically, a high-frequency ac voltage is applied, thereby generating plasma, and an argon atom charged with a plus charge in the plasma is caused to collide with the substrate charged with a minus charge, thereby removing the deposits on the substrate.

The UV-ozone treatment is conducted by placing an object of the treatment in an UV-ozone cleaning apparatus "OC-2506" (manufactured by IWASAKI ELECTRIC CO., LTD.) and irradiating the object with ultraviolet light for about 5 minutes.

[Aqueous paste-preparing step]

The aqueous paste used in the production process according to the present invention is composed of only semiconductor particles and water and contains neither a binder nor an organic solvent.

Incidentally, in this aqueous paste-preparing step including a step of preparing large semiconductor particles, an organic solvent may be used in some cases. However, since the organic solvent is positively removed, the aqueous paste is regarded as "containing no organic solvent" in the present invention so far as the performance of the photoelectrode produced is not affected even when the organic solvent is contained in the aqueous paste as residue.

No particular limitation is imposed on the preparation process of the aqueous paste containing the group of specific semiconductor particles forming the photoelectric conversion layer 23. However, for example, a basic process, which has been created by the present inventors and comprises hydrolyzing an alkoxide with a quaternary ammonium salt, is preferably used. Specifically, according to this basic process, an alkoxide for obtaining the small semiconductor particles is hydrolyzed with a quaternary ammonium salt to obtain the small semiconductor particles, an alkoxide for obtaining the large semiconductor particles is hydrolyzed with a quaternary ammonium salt to obtain the large semiconductor particles, and these particles are mixed, whereby the aqueous paste can be prepared.

The average particle diameter of the resulting semiconductor particles can be controlled by controlling the amount of the quaternary ammonium salt used in the hydrolysis. Semiconductor particles having a smaller average particle diameter can be obtained as the amount of the quaternary ammonium salt added is increased.

As the quaternary ammonium salt, may be used, for example, tetramethylammonium hydroxide (TMAH). However, the alkyl is not limited to methyl, and quaternary ammonium salts having alkyl groups having 1 to 4 carbon atoms may be exemplified.

As the alkoxide for obtaining the large semiconductor particles, may be used an alkoxide of a metal making up the above-described semiconductor particles.

Specifically, for example, when the semiconductor particles are titania particles, $Ti(OC_3H_5)_4$ may be used as the alkoxide for the semiconductor particles, and TMAH may be used as the quaternary ammonium salt.

The proportion of the group of specific semiconductor particles contained in the aqueous paste is preferably 5 to 30% by mass, more preferably 8 to 15% by mass.

[Coating film-forming step]

This step is a step of applying the aqueous paste on to the transparent conductive layer 21b of the transparent substrate 21 to obtain a dried coating film 23A, and no particular limitation is imposed on a method for applying the aqueous paste on to the transparent conductive layer 21b of the transparent substrate. For example, the application can be conducted according to publicly known various methods such as a doctor blade method and a spray method.

The drying temperature may be controlled to, for example, room temperature.

The region of the aqueous paste applied on to the transparent conductive layer 21b functions as a working electrode, and an area of this working electrode region may be suitably selected according to uses.

The area of the working electrode produced according to the production process of the present invention is a size of, for example, about 20 cm x 20 cm though the size varies according to the performance of a pressing machine used in a pressing treatment step, which will be described subsequently, and a working electrode having a region wider than the above size may also be produced.

[Pressing treatment step]

This step is a step of subjecting the coating film 23A to a pressing treatment to obtain a functional semiconductor layer 23α, and the semiconductor particles in the coating film 23A can be caused to sufficiently adhere to one another by the pressing treatment to achieve high electron transferring ability.

A great number of randomly meandered linear cracks are unavoidably produced in the coating film formed on the transparent conductive layer from the aqueous paste with drying unless this pressing treatment is conducted, and the cracks are left to stand as they are. There is thus a great possibility that the resulting dye-sensitized solar cell may not have the expected performance. If the cracks are left to stand, there is a possibility that separation or the like may occur to fail to achieve sufficient durability. The reason why the cracks are produced in the coating film formed on the transparent conductive layer from the aqueous paste is considered to be attributable to the fact that the film thickness of the coating film is extremely thin, and the coating liquid is the aqueous paste containing neither an organic solvent nor a binder.

In the production process of the present invention, the cracks can be filled by this pressing treatment to achieve high electron transferring ability.

The state that the cracks have been produced before the pressing treatment, and the state (traces of the cracks) that the cracks have been filled after the pressing treatment can be respectively visually observed through a scanning electron microscope (SEM).

Incidentally, even in the coating film obtained through the pressing treatment step and the dye-carrying step, on which the sensitizing dye has been carried, the traces of the cracks can be clearly confirmed by observation through SEM.

No particular limitation is imposed on a method of the pressing treatment for the aqueous paste. As examples thereof, may be mentioned publicly known various methods such as a press molding method using a flat plate type pressing machine or the like, a roll pressing method and a calendering method.

The pressing treatment is preferably conducted at room temperature. Incidentally, "room temperature" is ordinarily 20 to 35°C.

This pressing treatment is preferably conducted under conditions that the light transmittance of a laminate with the functional semiconductor layer 23α formed on the transparent substrate 21 at a wavelength of 400 to 800 nm reaches 105 to 170%, preferably 110 to 170%, particularly preferably 110 to 130% of a value before the pressing treatment. The pressing treatment is preferably conducted under a pressure of, for example, 5 MPa or more, preferably 30 MPa or more, and this treatment is conducted under a pressure of 500 MPa or less, preferably 150 MPa or less, whereby the above-described light transmittance can be realized, and the cracks unavoidably produced in the coating film of the aqueous paste can be filled.

If the pressure in the pressing treatment is too high when a plastic substrate is used in particular, the transparent base itself of the plastic substrate is distorted to adversely affect the performance of the resulting dye-sensitized solar cell, and moreover the transparent conductive layer formed on the transparent base may be broken. The too high pressure is hence not preferable.

The pressing treatment is preferably conducted in such a manner that the thickness of the functional conductive layer 23α is controlled to 80 to 30% of a value before the pressing treatment.

[UV-ozone treatment]

As needed, an UV-ozone treatment may be conducted as a surface treatment on the functional semiconductor layer 23α subjected to the pressing treatment after the pressing treatment step and before the subsequent dye-carrying step. This UV-ozone treatment may be conducted even when the UV-ozone treatment has been conducted or not conducted as the surface treatment on the transparent substrate 21.

This UV-ozone treatment is considered to contribute to the fact that not only the surfaces of the semiconductor particles making up the functional semiconductor layer 23α can be cleaned, but also hydrophilic groups of the semiconductor particles can be increased to create a state easy to adsorb the sensitizing dye. As a result, the photoelectric conversion efficiency of the resulting dye-sensitized solar cell can be made high.

Incidentally, there is a possibility that TMAH used in the preparation of the titania particles by the basic process in the aqueous paste-preparing step may remain as an unreacted compound in the functional semiconductor layer 23α. However, this TMAH can be decomposed by the UV-ozone treatment to clean the surfaces of the semiconductor particles. This UV-ozone treatment can be conducted in the same manner as in the UV-ozone treatment on the transparent substrate 21.

[Dye-carrying step]

No particular limitation is imposed on a method for carrying the sensitizing dye on the functional semiconductor layer $23\alpha$ of the photoelectrode structure 20K, and examples of the method include an immersion method, in which the sensitizing dye is dissolved in a solvent such as an alcohol, nitrile, nitromethane, halogenated hydrocarbon, ether, dimethyl sulfoxide, amide, N-methylpyrrolidone, 1,3-dimethylimidazolidinone, 3-methyloxazolidinone, ester, carbonate, ketone, hydrocarbon or water, or a mixed solvent composed of two or more solvents thereof, and the photoelectrode structure 20K, in which the functional semiconductor layer $23\alpha$ has been formed, is immersed in this solution, a spray-coating method and a print-coating method.

The photoelectrode 20 obtained by the above-described production process has the photoelectric conversion layer 23 formed on the transparent substrate 21, and the photoelectric conversion layer 23 contains the group of specific semiconductor particles and the sensitizing dye, and does not contain a binder.

In a dye-sensitized solar cell using the photoelectrode for dye-sensitized solar cell obtained by the production process described above, the photoelectric conversion efficiency in the case where the transparent base is made of a plastic becomes higher than the case where the transparent base is made of glass. This reason is presumed to attribute to the fact that the semiconductor particles are pressed on the transparent substrate made of the soft plastic, whereby the semiconductor particles are caused to somewhat sink into the transparent conductive layer to attain their closer contact with one another. Since the transparent base made of a hard material such as glass does not have such elasticity, it is presumed that the performance becomes lower than that using the plastic transparent substrate.

[Electrolyte part]

In the dye-sensitized solar cell according to the present invention, the electrolyte part 12 interposed between the photoelectrode 20 and the counter electrode 16 may be composed of any of a liquid, a solid, a coagulated material and an ordinary-temperature fused salt.

The thickness of this electrolyte part 12, i.e., a clearance between the photoelectrode 20 and the counter electrode 16 is controlled to, example, 1 to 100 $\mu$m.

When the electrolyte part 12 is composed of, for example, a solution, this electrolyte part 12 is preferably formed by an electrolyte, a solvent and additive(s).

The electrolyte may be a combination of a metal iodide such as lithium iodide, sodium iodide, potassium iodide or cesium iodide and iodine, a combination of an iodine salt of a quaternary ammonium compound, such as tetraalkylammonium iodide, pyridinium iodide or imidazolium iodide, and iodine, or a combination of a bromine compound and bromine in place of the above-described iodine and iodine compound. When the electrolyte is an ionic liquid, the solvent may not be used in particular. The electrolyte may be a gel electrolyte, polyelectrolyte or solid electrolyte, and an organic charge-transporting substance may be used in place of the electrolyte.

Examples of the solvent in the case where the electrolyte part 12 is composed of the solution include nitrile solvents such as acetonitrile, methoxyacetonitrile and propionitrile, carbonate solvents such as ethylene carbonate, ether solvents, and alcohol solvents.

When the electrolyte part 12 is composed of the solution, the concentration of the electrolyte in the electrolyte solution is preferably 0.1 to 5.0 M, more preferably 0.1 to 1.0 M when the electrolyte is a combination of an iodine salt and iodine though it varies according to the kind of the electrolyte.

[Counter electrode]

The counter electrode 16 functions as a positive electrode, and examples of a material forming the counter electrode 16 include metals such as platinum, gold, silver, copper, aluminum, rhodium and indium, carbon, and conductive metal oxides such as ITO and FTO. The counter electrode 16 may be generally formed by providing a conductive film composed of the metal, carbon or conductive oxide on a conductive base or a base having a conductive layer composed of the same material as the conductive base. However, the base is not essential so far as sufficient strength and sealing performance are achieved.

[Production process of photoelectric conversion element]

The above-described photoelectric conversion element 10 making up the dye-sensitized solar cell is obtained by arranging the photoelectrode 20 and the counter electrode 16 through a proper spacer so as to oppose to each other when the electrolyte part 12 is composed of a liquid, and enclosing the electrolyte part 12 between the photoelectrode 20 and the counter electrode 16.

The photoelectric conversion element 10 can be fabricated in various forms according to uses, and no particular limitation is imposed on the form thereof.

Photoelectric conversion in this dye-sensitized solar cell is conducted in the following manner.

Incident sunlight transmitted through the transparent substrate 21 of the photoelectrode 20 is absorbed in the sensitizing dye in a ground state, which has been carried on the surfaces of the semiconductor particles in the photoelectric conversion layer 23, and this sensitizing dye is excited to generate electrons. The electrons are injected into the semiconductor particles, and the electrons injected into the semiconductor particles diffuse into the photoelectric conversion layer 23 and guided to the counter electrode 16 through the transparent conductive layer 21b and a connection 17. On the other hand, the sensitizing dye, from which the electrons have been lost, receives electrons from the electrolyte part 12 to return to the ground state. The electrolyte part 12 oxidized by transferring the electrons receives electrons from the counter electrode 16 and reduced to return to the original state. Electromotive force is generated between the transparent substrate 21 electrically connected to the photoelectric conversion layer 23 and the counter electrode 16 through a series of the processes.

According to the dye-sensitized solar cell comprising the above-described photoelectric conversion element 10, at least two kinds of the specific semiconductor particles different in average particle diameter are caused to be contained in the photoelectric conversion layer 23 of the photoelectrode 20 for dye-sensitized solar cell, so that a high light absorption efficiency by the so-called light confinement effect can be achieved as to the sensitizing dye contained in the photoelectric conversion layer 23. This photoelectric conversion layer 23 is formed by using the specific aqueous paste by means of the specific process, whereby the photoelectric conversion layer 23 can be formed on the transparent substrate 21 with high adhesion even when the transparent base 21a of the transparent substrate 21 is composed of any material, in other words, for example, a plastic substrate, which has heretofore been difficult to achieve a high light absorption efficiency, is used. As a result, even when the plastic substrate is used, a high level of photoelectric conversion efficiency can be retained even when the quantity of incident light is changed.

[Modification embodiments]

Various modifications may be added to the above-described photoelectric conversion element.

For example, a light scattering layer 25 may be formed on the surface of the photoelectric conversion layer 23 as illustrated in FIG. 3. The light scattering layer 25 of this photoelectric conversion element 10A may be composed of a coating film of, for example, an aqueous paste containing neither a binder nor an organic solvent and containing large semiconductor particles.

The thickness of the light scattering layer 25 may be controlled to, for example 1 to 15 $\mu$m.

According to the photoelectric conversion element 10A having a photoelectrode 20A for dye-sensitized solar cell, on which such a light scattering layer 25 has been formed, an extremely high light confinement effect can be achieved. As a result, a dye-sensitized solar cell capable of achieving an extremely high photoelectric conversion efficiency can be fabricated.

In the photoelectrode for dye-sensitized solar cell making up the above-described photoelectric conversion element, the photoelectric conversion layer may be composed of, for example, a sensitizing dye-carried and pressed semiconductor layer obtained by carrying the sensitizing dye on the coating film of the aqueous paste containing neither a binder nor an organic solvent and containing the group of the specific semiconductor particles and then conducting the pressing treatment.

Incidentally, the photoelectrode for dye-sensitized solar cell according to this embodiment is obtained by carrying the sensitizing dye on the coating film of the aqueous paste and then conducting the pressing treatment. However, separation of the sensitizing dye occurs upon the pressing treatment in the production process, so that the performance of the resulting dye-sensitized solar cell is low compared with the photoelectrode 20 of the first embodiment, which is fabricated by subjecting the coating film of the aqueous paste to the pressing treatment and then carrying the sensitizing dye.

<Second embodiment>

A photoelectrode for dye-sensitized solar cell making up a dye-sensitized solar cell according to this embodiment has the same construction as in the first embodiment except that the functional semiconductor layer making up the photoelectric conversion layer is of a multilayer structure that at least one layer composed of a coating film of an aqueous paste containing the group of the specific semiconductor particles and containing neither a binder nor an organic solvent is formed on the layer obtained by subjecting the coating film of the aqueous paste to the pressing treatment.

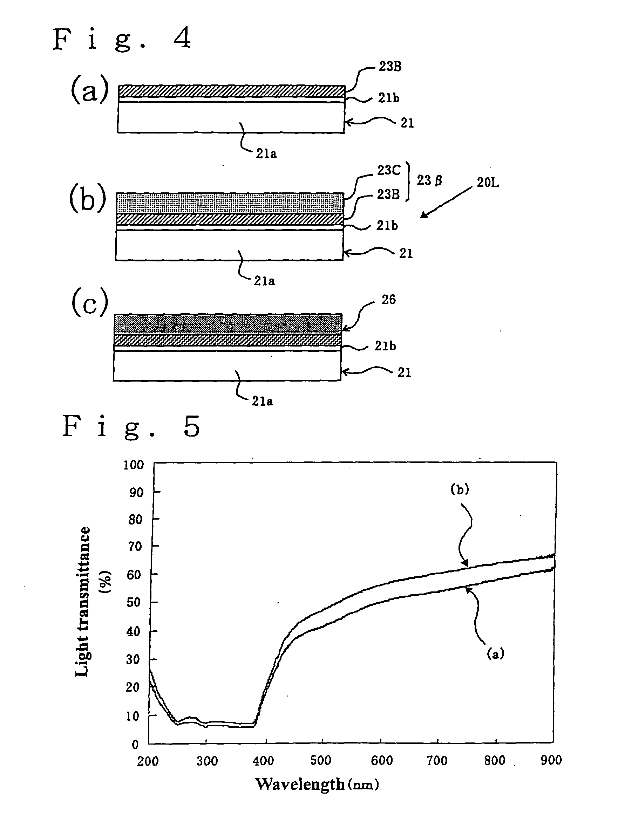

Specifically, this photoelectric conversion layer 26 (see FIG. 4(c)) is obtained by carrying a sensitizing dye on a functional semiconductor layer 23β obtained in the same manner as the functional semiconductor layer 23α in the first embodiment, i.e., obtained by forming at least one coating film 23C (see FIG. 4(b) of an aqueous paste containing neither a binder nor an organic solvent and containing the group of the specific semiconductor particles on a layer 23B (see FIG. 4(a)) obtained by subjecting a coating film of an aqueous paste containing neither a binder nor an organic solvent and containing the group of the specific semiconductor particles to the pressing treatment.

The kinds and proportions of the group of the specific semiconductor particles contained in the aqueous paste for forming the coating film 23C of the aqueous paste may be the same or different from the kinds and proportions of the group of the specific semiconductor particles contained in the aqueous paste for forming the layer 23B obtained by subjecting the coating film to the pressing treatment.

In the photoelectric conversion element of this embodiment, the layer thickness of the layer 23B obtained by subjecting the coating film to the pressing treatment is controlled to, for example, 1 to 20 μm, and the layer thickness of said at least one coating film 23C of the aqueous paste is controlled to, for example, 1 to 15 μm.

As a production process of this photoelectrode for dye-sensitized solar cell, may be mentioned a process, in which as illustrated in FIG. 4(a) to FIG. 4(c), the coating film 23C of the aqueous paste is formed on the layer 23B of the photoelectrode structure 20K formed in the first embodiment, i.e., a structure that the transparent conductive layer 21b and the layer 23B obtained by subjecting the coating film to the pressing treatment are formed in this order on the transparent base 21a, thereby forming a photoelectrode structure 20L, and a sensitizing dye is carried on a functional semiconductor layer 23β in this photoelectrode structure 20L by the above-described method or the like. Specifically, one to three coating films 23C of the aqueous paste are formed after the pressing treatment step (4) of the production process in the first embodiment, and the dye-carrying step (5) is then conducted.

The pressing treatment for obtaining the layer 23B obtained by subjecting the coating film to the pressing treatment on the transparent substrate 21, which is conducted in a state that the coating film has been formed, can be conducted under the same conditions as in the pressing treatment in the first embodiment. More specifically, the pressing treatment is preferably conducted under conditions that the light transmittance of a laminate of the layer 23B obtained by subjecting the coating film to the pressing treatment and the transparent substrate 21 at a wavelength of 400 to 800 nm reaches 105 to 170%, preferably 110 to 170%, particularly preferably 110 to 130% of a value before the pressing treatment. The pressing treatment is conducted under a pressure of, for example, 5 MPa or more, preferably 30 MPa or more, and a pressure of 500 MPa or less, preferably 150 MPa or less, whereby the above-described light transmittance can be realized, and the cracks unavoidably produced in the coating film of the aqueous paste can be filled.

If the pressure in the pressing treatment is too high when a plastic transparent base is used in particular, the transparent base itself is distorted to adversely affect the performance of the resulting dye-sensitized solar cell, and moreover the transparent conductive layer formed on the transparent base may be broken. The too high pressure is hence not preferable.

The pressing treatment is preferably conducted in such a manner that the thickness of the layer 23B obtained by subjecting the coating film to the pressing treatment, which makes up the functional conductive layer 23β, is controlled to 80 to 30% of a value before the pressing treatment.

As needed, an UV-ozone treatment may be conducted as a surface treatment on the functional semiconductor layer 23β after the coating film 23C of the aqueous paste is laminated after the pressing treatment step and before the subsequent dye-carrying step in the same manner as in the first embodiment. This UV-ozone treatment may be conducted even when the UV-ozone treatment has been conducted or not conducted as the surface treatment on the transparent substrate 21.

This UV-ozone treatment is considered to contribute to the fact that not only the surfaces of the semiconductor particles making up the functional semiconductor layer 23β can be cleaned, but also hydrophilic groups of the semiconductor particles can be increased to create a state easy to adsorb the sensitizing dye. As a result, the photoelectric conversion efficiency of the resulting dye-sensitized solar cell can be made high.

Incidentally, there is a possibility that TMAH used in the preparation of the titania particles by the basic process in the aqueous paste-preparing step may remain as an unreacted compound in the functional semiconductor layer 23β. However, this TMAH can be decomposed by the UV-ozone treatment to clean the surfaces of the semiconductor particles.

According to the photoelectrode for dye-sensitized solar cell composed of the photoelectric conversion element 10A according to this embodiment, the same effects as the photoelectric conversion element 10 of the first embodiment can be achieved.

EXAMPLES

The present invention will hereinafter be described specifically by the following Examples. However, the present invention is not limited to these examples.

[Example 1]

(Preparation of suspension of titania semiconductor particles)

Tetraisopropyl orthotitanate (56.8 g) was added dropwise into ion-exchanged water (200 mL) under strong stirring, and the stirring was continued for additionally 1 hour after completion of the drop addition, thereby completing hydrolysis to obtain a precipitate of the intended titanium hydroxide. The precipitate was separated by filtration with filter paper and sufficiently washed with ion-exchanged water.

This precipitate was added into ion-exchanged water, in which tetramethylammonium hydroxide (TMAH; 5.8 g) had been dissolved, and ion-exchanged water was further added in such a manner that the whole amount of a sample is 160 g. After this sample was heated under reflux for 4 hours at 140°C, microcrystals were removed with a glass filter, thereby obtaining a cloudy translucent colloidal solution.

The resultant colloidal solution was transferred to a closed autoclave to conduct hydrothermal synthesis for 8 hours at 260°C. After the hydrothermal synthesis, the solvent of the colloidal solution was replaced by ethanol by means of an evaporator, and an ultrasonic dispersion treatment was then conducted to obtain an ethanol suspension [A] containing anatase crystal type titania particles [A] having an average particle diameter of 20 nm (the above-described process is referred to as "preparation process of semiconductor particle suspension").

Incidentally, an almost all amount of trimethylamine produced by decomposition of TMAH is removed upon the process of replacing the solvent of the colloidal solution by ethanol.

An ethanol suspension [B] containing anatase crystal type titania particles [B] having an average particle diameter of 100 nm was obtained in the same manner as in this preparation process of semiconductor particle suspension except that the amount of TMAH added was changed to 1.5 g.

Incidentally, with respect to the titania particles contained in each of the ethanol suspensions [A] and [B], the average particle diameter was calculated out according to the Scherrer's equation ($D = K \times \lambda/\beta \cos\theta$) by applying the ethanol suspension on to slide glass by a doctor blade method, drying the suspension, and then measuring an XRD pattern to find a half value width from the resultant XRD pattern, and the crystal type of the titania particles was confirmed. In the above equation, D is a length of a crystallite, $\beta$ is a half value width, $\theta$ is an angle of diffraction, K is 0.94, and $\lambda$ is 1.5418. Almost all of both titania particles [A] and titania particles [B] were of an anatase crystal type, and the presence of a rutile crystal type was not confirmed.

(Preparation of aqueous paste for formation of photoelectric conversion layer)

With respect to these two kinds of ethanol suspensions [A] and [B], the concentration of the titania particles in each of the suspensions was found according to an equation [Concentration (% by weight) of titania particles = $(W_2 - W)/(W_1 - W) \times 100$] by first weighing a mass (W) of a crucible, then putting the ethanol suspension into the crucible, weighing the total mass ($W_1$) of the crucible and the ethanol suspension, placing this crucible in an electric furnace to hold the crucible for 2 hours at 150°C, thereby completely removing the solvent of the ethanol suspension, and weighing a mass ($W_2$) of the crucible again.

The ethanol suspensions were mixed in such a manner that a weight ratio of the titania particles [A] to the titania particles [B] is 7:3 on the basis of the respective concentrations, and the solvent of this mixture was almost completely replaced again by water by means of an evaporator, and the mixture was then concentrated, thereby finally obtaining an aqueous paste [1] for formation of a photoelectric conversion layer having a titania particle concentration of 10% by weight and containing water as a medium.

(Application of aqueous paste for formation of photoelectric conversion layer, and pressing treatment)

This aqueous paste [1] for formation of photoelectric conversion layer was applied to a working electrode region of a size of 0.5 cm x 0.5 cm in a transparent substrate composed of an ITO/PEN (polyethylene naphthalate) substrate (product of Oji Tobi) having a sheet resistance of 13 $\Omega/\square$ by a doctor blade method and then dried at room temperature to obtain a coating film. This coating film was subjected to a pressing treatment for 60 seconds under a pressure of 100 MPa, thereby obtaining a photoelectrode structure with a functional semiconductor layer formed on the transparent substrate.

Incidentally, the reason why an aqueous paste containing commercially-available titania "P-25" (product of Nippon Aerosil Co., Ltd.) at a concentration of 10% by weight could not be applied to the transparent substrate, whereas the aqueous paste [1] for formation of photoelectric conversion layer could be applied to the transparent substrate though the titania particles were contained at a concentration of 10% by weight is not clearly known. However, it is considered that the viscosity of the aqueous paste [1] for formation of photoelectric conversion layer is raised by TMAH that may possibly remain.

This pressing treatment was conducted, whereby the light transmittance of the functional semiconductor layer at a wavelength of 400 to 800 nm was increased to 110% of a value before the pressing treatment, and the layer thickness thereof was reduced to 70% and 8 $\mu$m. An effective area of a cell was compensated at four significant figures by means of a digital microscope and a calibration scale. The measured results of the light transmittance of this photoelectrode structure at a wavelength of 200 to 900 nm are illustrated in FIG. 5(b). Incidentally, FIG. 5(a) illustrates a light transmittance of the transparent substrate, on which the coating film has been formed, before the pressing treatment.

The coating film formed on the transparent substrate with the aqueous paste [1] for formation of photoelectric conversion layer before the pressing treatment was observed through SEM. As a result, it was observed that a great number of linear cracks having a length of about 10 to 100 $\mu$m in an SEM photograph of 1,000 magnifications are randomly formed. The cracks were further observed in an SEM photograph of 20,000 magnifications. As a result, it was confirmed that individual titania particles are present independently.

On the other hand, SEM photographs of 1,000 and 20,000 magnifications after the pressing treatment were observed. As a result, almost all cracks formed in plenty were observed being filled, and the traces thereof were confirmed, and it was also observed that the titania particles are closely bonded to one another.

The traces of the cracks filled by the pressing treatment are observed, whereby it is presumed that a contact area between the semiconductor particles and the transparent conductive layer is increased to improve the performance of the resultant dye-sensitized solar cell.

(Carrying sensitizing dye, and fabrication of photoelectrode)

On the other hand, bis-tetrabutylammonium cis-bis(isothiocyanato)-bis(2,2'-dipyridyl-4,4'-dicarboxylic acid)-ruthenium(II) was used as a sensitizing dye and dissolved at a concentration of 0.2 mM in ethanol to obtain a dye solution. The photoelectrode structure with the functional semiconductor layer formed was immersed in this dye solution for 24 hours to obtain a photoelectrode [1] with the sensitizing dye carried on the functional semiconductor layer.

Incidentally, this photoelectrode [1] was observed through SEM in the same manner as described above. As a result, the traces of the cracks confirmed in the observation through SEM after the pressing treatment were observed likewise.

(Fabrication of dye-sensitized solar cell)

An acetonitrile solution with iodine, lithium iodide, 1,2-dimethyl-3-propylimidazolium iodide and t-butylpyridine dissolved therein was used as an electrolyte solution. These components were dissolved in acetonitrile under a nitrogen atmosphere so as to give respective concentrations of 0.05 M, 0.1 M, 0.6 M and 0.5 M.

An ITO-PET film vapor-deposited with platinum was used as a counter electrode.

An insulating spacer and the counter electrode were combined with the photoelectrode [1] in this order, and the electrolyte solution is poured between the photoelectrode [1] and the counter electrode by a microsyringe, thereby fabricating a dye-sensitized solar cell [1].

The thus-fabricated dye-sensitized solar cell had extremely excellent performance, and the influence of TMAH was not observed. This is presumed to be attributable to the fact that if TMAH is present in the functional semiconductor layer after the pressing treatment, the photoelectrode structure is immersed in the ethanol solution of the sensitizing dye, whereby this TMAH is dissolved in ethanol and removed at the same time that the sensitizing dye is strongly bonded to the titania particles, and consequently TMAH is prevented from entering between the titania particles and between the titania particles and the transparent substrate.

(Performance evaluation of dye-sensitized solar cell)

While this dye-sensitized solar cell [1] was being irradiated with artificial sunlight of AM 1.5 and 100 mW/cm$^2$ by means of "Solar simulator" (manufactured by Peccell Technologies, Inc.), I-V properties were measured by means of "2400 Type Source Meter" (manufactured by KEITHLEY CO.) to obtain values of a short-circuit current, a release voltage and a form factor ff, and a photoelectric conversion efficiency was calculated out from these values according to the following equation (1). The results are shown in Table 1.

```
Equation (1); Polymerization container efficiency (%)
```

$$= [\text{short-circuit current value (mA/cm}^2) \text{ x Release}$$

$$\text{voltage value (V) x \{Form factor ff/incident light}$$

$$(100 \text{ mW/cm}^2)\}] \text{ x } 100$$

[Example 2]

A dye-sensitized solar cell [2] was obtained in the same manner as in Example 1 except that the ethanol suspensions were mixed in such a manner that a weight ratio of the titania particles [A] to the titania particles [B] is 6: 4. With respect to this dye-sensitized solar cell [2], values of a short-circuit current, a release voltage, a form factor ff and a photoelectric conversion efficiency were obtained in the same manner as in Example 1. The results are shown in Table 1.
Incidentally, the light transmittance of the functional semiconductor layer at a wavelength of 400 to 800 nm was increased to 130% of a value before the pressing treatment, and the layer thickness thereof was reduced to 70% and 7 $\mu$m.

[Example 3]

A dye-sensitized solar cell [3] was obtained in the same manner as in Example 2 except that an ITO/cycloolefin polymer substrate "ZEONOR Substrate" (product of ZEON CORPORATION) was used in place of the ITO/PEN substrate. With respect to this dye-sensitized solar cell [3], values of a short-circuit current, a release voltage, a form factor ff and a photoelectric conversion efficiency were obtained in the same manner as in Example 1. The results are shown in Table 1.

[Example 4]

A dye-sensitized solar cell [4] was obtained in the same manner as in Example 2 except that an ITO/heat-resistant acrylic substrate (product of The Nippon Synthetic Chemical Industry Co., Ltd.) was used in place of the ITO/PEN substrate. With respect to this dye-sensitized solar cell [4], values of a short-circuit current, a release voltage, a form factor ff and a photoelectric conversion efficiency were obtained in the same manner as in Example 1. The results are shown in Table 1.

[Example 5]

A dye-sensitized solar cell [5] was obtained in the same manner as in Example 3 except that the working electrode region was changed to 0.5 cm x 4.5 cm, and the conditions of the pressing treatment were changed to a pressure of 80 MPa. With respect to this dye-sensitized solar cell [2], values of a short-circuit current, a release voltage, a form factor ff and a photoelectric conversion efficiency were obtained in the same manner as in Example 1. The results are shown in Table 1.
Incidentally, the light transmittance of the functional semiconductor layer at a wavelength of 400 to 800 nm was increased to 130% of a value before the pressing treatment, and the layer thickness thereof was reduced to 70% and 6 $\mu$m.

[Example 6]

A dye-sensitized solar cell [6] was obtained in the same manner as in Example 3 except that the working electrode region was changed to 0.5 cm x 9.0 cm, and the conditions of the pressing treatment were changed to a pressure of 80 MPa. With respect to this dye-sensitized solar cell [6], values of a short-circuit current, a release voltage, a form factor ff and a photoelectric conversion efficiency were obtained in the same manner as in Example 1. The results are shown in Table 1.
Incidentally, the light transmittance of the functional semiconductor layer at a wavelength of 400 to 800 nm was increased to 130% of a value before the pressing treatment, and the layer thickness thereof was reduced to 70% and 7 $\mu$m.

[Example 7]

A dye-sensitized solar cell [7] was obtained in the same manner as in Example 2 except that an ITO/conductive glass substrate having a sheet resistance of 9 $\Omega/\square$ was used as the transparent substrate in place of the ITO/PEN substrate. With respect to this dye-sensitized solar cell [7], values of a short-circuit current, a release voltage, a form factor ff and a photoelectric conversion efficiency were obtained in the same manner as in Example 1. The results are shown in Table 1.
Incidentally, the layer thickness of the functional semiconductor layer was reduced to 70% and 5 $\mu$m.

[Comparative Example 1]

A comparative dye-sensitized solar cell [1] was obtained in the same manner as in Example 1 except that the pressing treatment was not conducted. With respect to this comparative dye-sensitized solar cell [1], values of a short-circuit current, a release voltage, a form factor ff and a photoelectric conversion efficiency were obtained in the same manner as in Example 1. The results are shown in Table 1.

[Comparative Example 2]

A comparative dye-sensitized solar cell [2] was obtained in the same manner as in Example 1 except that a commercially-available paste "PECC-01-06" (product of Peccell Technologies, Inc.) was used in place of the aqueous paste [1] for formation of photoelectric conversion layer, the pressing treatment was not conducted, and a heat treatment was conducted for 10 minutes at 150°C. With respect to this comparative dye-sensitized solar cell [2], values of a short-circuit current, a release voltage, a form factor ff and a photoelectric conversion efficiency were obtained in the same manner as in Example 1. The results are shown in Table 1.

[Comparative Example 3]

A comparative dye-sensitized solar cell [3] was obtained in the same manner as in Example 1 except that the pressing treatment for the coating film was not conducted, and a heat treatment was conducted for 10 minutes at 150°C. With respect to this comparative dye-sensitized solar cell [3], values of a short-circuit current, a release voltage, a form factor ff and a photoelectric conversion efficiency were obtained in the same manner as in Example 1. The results are shown in Table 1.

[Comparative Example 4]

A comparative dye-sensitized solar cell [4] was obtained in the same manner as in Example 2 except that an ITO/conductive glass substrate having a sheet resistance of 9 $\Omega/\square$ was used as the transparent substrate in place of the ITO/PEN substrate, the pressing treatment was not conducted, a calcining treatment was conducted for 1 hour at 520°C after the aqueous paste [1] for formation of photoelectric conversion layer was applied and dried, and a counter electrode obtained by sputtering platinum on conductive glass was used. With respect to this comparative dye-sensitized solar cell [4], values of a short-circuit current, a release voltage, a form factor ff and a photoelectric conversion efficiency were obtained in the same manner as in Example 1. The results are shown in Table 1.

[Comparative Example 5]

A comparative dye-sensitized solar cell [5] was obtained in the same manner as in Example 1 except that a comparative aqueous paste [Y] for formation of photoelectric conversion layer prepared by mixing the two kinds of ethanol suspensions [A] and [B] in such a manner that a weight ratio of the titania particles [A] to the titania particles [B] is 6:4, adding ethyl cellulose and $\alpha$-terpineol to this mixture, uniformly dispersing the mixture by a homogenizer and an ultrasonic disperser and then concentrating the resultant dispersion by a rotary evaporator was used in place of the aqueous paste [1] for formation of photoelectric conversion layer, and a comparative photoelectrode fabricated by conducting printing on conductive glass having a sheet resistance of 9 $\Omega/\square$ with this comparative aqueous paste [Y] for formation of photoelectric conversion layer by means of a screen printer so as to give a working electrode region of 0.5 cm x 0.5 cm and conducting a calcining treatment for 1 hour at 520°C, and a counter electrode obtained by sputtering platinum on conductive glass were used. With respect to this comparative dye-sensitized solar cell [5], values of a short-circuit current, a release voltage, a form factor ff and a photoelectric conversion efficiency were obtained in the same manner as in Example 1. The results are shown in Table 1.
Incidentally, the layer thickness of the functional semiconductor layer was 7 $\mu$m.

[Comparative Example 6]

A comparative dye-sensitized solar cell [6] was obtained in the same manner as in Example 1 except that a comparative aqueous paste [Z] for formation of photoelectric conversion layer composed of the titania particles [A] alone was used in place of the aqueous paste [1] for formation of photoelectric conversion layer. With respect to this comparative dye-sensitized solar cell [6], values of a short-circuit current, a release voltage, a form factor ff and a photoelectric conversion efficiency were obtained in the same manner as in Example 1. The results are shown in Table 1.

Incidentally, the light transmittance of the functional semiconductor layer at a wavelength of 400 to 800 nm was increased to 130% of a value before the pressing treatment, and the layer thickness thereof was reduced to 70% and 7 $\mu$m.

[Comparative Example 7]

A comparative dye-sensitized solar cell [7], in which a photoelectric conversion layer having a thickness of 8.1 $\mu$m was formed, was obtained in the same manner as in Example 1 except that a comparative aqueous paste [W] for formation of photoelectric conversion layer composed of a total amount of 10% by weight of the titania particles [A] and the titania particles [B], hydroxypropyl cellulose (0.5% by weight), and water and containing the titania particles [A] and the titania particles [B] at a weight ratio of 7:3 was used in place of the aqueous paste [1] for formation of photoelectric conversion layer. With respect to this comparative dye-sensitized solar cell [7], values of a short-circuit current, a release voltage, a form factor ff and a photoelectric conversion efficiency were obtained in the same manner as in Example 1. The results are shown in Table 1.

[Table 1]

| | Layer thickness ($\mu$m) | Result | | | |
|---|---|---|---|---|---|
| | | Value of short-circuit current (ml/cm$^2$) | Release voltage (V) | Value of form factor 55 ff | Photoelectric conversion efficiency (%) |
| Example 1 | 8 | 12.4 | 0.75 | 0.77 | 7.1 |
| Example 2 | 7 | 12 | 0.77 | 0.75 | 6.9 |
| Example 3 | 7 | 11.7 | 0.79 | 0.73 | 6.7 |
| Example 4 | 7 | 11.5 | 0.76 | 0.71 | 6.2 |
| Example 5 | 6 | 10.8 | 0.77 | 0.74 | 6.2 |
| Example 6 | 7 | 10.9 | 0.75 | 0.76 | 6.2 |
| Example 7 | 5 | 11.7 | 0.76 | 0.72 | 6.4 |
| Comparative 1 Example | 7 | 4.1 | 0.78 | 0.61 | 2.2 |
| Comparative 2 Example | 5 | 5.5 | 0.73 | 0.59 | 2.4 |
| Comparative Examples 3 | 7 | 8.8 | 0.76 | 0.58 | 3.9 |
| Comparative 4 Example | 6 | 10 | 0.81 | 0.68 | 5.6 |
| Comparative 5 Example | 7 | 11.2 | 0.79 | 0.71 | 6.3 |
| Comparative Example 6 | 7 | 10.3 | 0.73 | 0.71 | 5.37 |
| Comparative 7 Example | 8.1 | 6.8 | 0.72 | 0.70 | 3.4 |

As apparent from Table 1, it was confirmed that the dye-sensitized solar cells of Examples 1 to 7 according to the present invention achieve a high photoelectric conversion efficiency.

The reason why the dye-sensitized solar cell [1] of Example 1 exhibits a high photoelectric conversion efficiency compared with the dye-sensitized solar cells of the other Examples 2 to 7 is considered to be attributable to the fact that the value of the form factor ff is high, that is, the adhesion between the titania particles and the transparent substrate is good.

When the results of Example 1 were compared with the results of Comparative Example 5 relating to the comparative dye-sensitized solar cell obtained by using the glass substrate as the transparent substrate and the binder-containing paste and conducting calcination at a high temperature, which has heretofore been conducted, it was confirmed that the dye-sensitized solar cell according to the present invention exhibits a photoelectric conversion efficiency equal to or more than the conventional dye-sensitized solar cell using the glass substrate.

When the results of Examples 1, 3 and 4 were compared with one another, it was indicated that a difference in material between the transparent bases each forming the transparent substrate affects the degree of the photoelectric conversion efficiency.

When the results of Examples 1, 5 and 6 were compared with one another, it was confirmed that when the working electrode region is made large, the degree of the photoelectric conversion efficiency is affected and shows a tendency to be somewhat lowered, but as apparent from the results of Example 6 in particular, a high photoelectric conversion efficiency of 6% or more is achieved even when the working electrode region is made large.

It was confirmed from the results of Example 7 that even when the transparent substrate composed of the transparent base made of glass is used, the resultant dye-sensitized solar cell [7] achieves a high photoelectric conversion efficiency though it lacks merits such as flexibility compared with the dye-sensitized solar cells using the plastic substrate.

On the other hand, it was confirmed from the results of Comparative Examples 1 to 4 relating to the comparative dye-sensitized solar cells obtained without conducting the pressing treatment that a high photoelectric conversion efficiency is not achieved unless the pressing treatment is conducted. A great main cause thereof is that the adhesion between the titania particles and between the titania particles and the transparent substrate becomes low as the result that the pressing treatment was not conducted. In addition, it is considered as another main cause that cracks caused by using the aqueous paste remain intact.

It was also confirmed from the results of Comparative Example 6 that the solar cell using only one kind of semiconductor particles having a small average particle diameter cannot achieve a high photoelectric conversion efficiency compared with the solar cells of the present invention using two kinds of semiconductor particles different in average particle diameter.

It was further confirmed from the results of Comparative Example 7 that the solar cell having the photoelectric conversion layer containing the binder cannot achieve a high photoelectric conversion efficiency compared with the solar cells of the present invention having the photoelectric conversion layer containing no binder. This is presumed to be attributable to the fact that the binder is entered into between the titania particles and between the titania particles and the transparent substrate, so that the adhesion therebetween is lowered to inhibit electron transfer.

[Experimental Examples 1 to 7]

Nine dye-sensitized solar cells having the same construction as in each of Examples 1 to 7, i.e., 63 dye-sensitized solar cells in total, were respectively fabricated in the same manner as in Examples 1 to 7. With respect to all the dye-sensitized solar cells, values of a short-circuit current, a release voltage, a form factor ff and a photoelectric conversion efficiency were measured in the same manner as in Example 1. As a result, all the 9 dye-sensitized solar cells in each Experimental Example exhibit that the values falls within an error range of $\pm 0.2\%$ relative to their corresponding values of Examples 1 to 7 shown in Table 1.

By these Experimental Examples, it was confirmed that a dye-sensitized solar cell having a high photoelectric conversion efficiency can be stably produced with good reproducibility.

[Example 8]

A dye-sensitized solar cell (a) was obtained in the same manner as in Example 1 except that the two kinds of ethanol suspensions [A] and [B] were mixed in such a manner that a weight ratio of the titania particles [A] to the titania particles [B] is 6:4, and the conditions of the pressing treatment were changed to a pressure of 80 MPa (gauge pressure; 4 MPa). With respect to the photoelectrode structure [a] of this dye-sensitized solar cell [a], light transmittances (absolute values) at wavelengths of 400 nm, 500 nm, 600 nm, 700 nm and 800 nm were measured. The results are shown in Table 2.

[Example 9]

A dye-sensitized solar cell (b) was obtained in the same manner as in Example 9 except that the conditions of the pressing treatment were changed to a pressure of 160 MPa (gauge pressure; 8 MPa). With respect to the photoelectrode structure [b] of this dye-sensitized solar cell [b], light transmittances (absolute values) at wavelengths of 400 nm, 500 nm, 600 nm, 700 nm and 800 nm were measured. The results are shown in Table 2.

[Example 10]

A dye-sensitized solar cell (c) was obtained in the same manner as in Example 1 except that the conditions of the pressing treatment were changed to a pressure of 80 MPa (gauge pressure; 4 MPa). With respect to the photoelectrode structure [c] of this dye-sensitized solar cell [c], light transmittances (absolute values) at wavelengths of 400 nm, 500 nm, 600 nm, 700 nm and 800 nm were measured. The results are shown in Table 2.

[Example 11]

A dye-sensitized solar cell (d) was obtained in the same manner as in Example 10 except that the conditions of the pressing treatment were changed to a pressure of 160 MPa (gauge pressure; 8 MPa). With respect to the photoelectrode structure [d] of this dye-sensitized solar cell [d], light transmittances (absolute values) at wavelengths of 400 nm, 500 nm, 600 nm, 700 nm and 800 nm were measured. The results are shown in Table 2.

[Referential Example 1]

A referential dye-sensitized solar cell [e] was obtained in the same manner as in Example 1 except that only the titania particles [A] were used, and the conditions of the pressing treatment were changed to a pressure of 80 MPa (gauge pressure; 4 MPa). With respect to the photoelectrode structure [e] of this referential dye-sensitized solar cell [e], light transmittances (absolute values) at wavelengths of 400 nm, 500 nm, 600 nm, 700 nm and 800 nm were measured. The results are shown in Table 2.

[Referential Example 2]

A referential dye-sensitized solar cell [f] was obtained in the same manner as in Referential Example 1 except that the conditions of the pressing treatment were changed to a pressure of 160 MPa (gauge pressure; 8 MPa). With respect to the photoelectrode structure [f] of this referential dye-sensitized solar cell [f], light transmittances (absolute values) at wavelengths of 400 nm, 500 nm, 600 nm, 700 nm and 800 nm were measured. The results are shown in Table 2.
[Table 2]

| | Light transmittance (%) | | | | |
|---|---|---|---|---|---|
| | 400nm | 500nm | 600nm | 700nm | 800nm |
| Example 8 | 12.6 | 34.4 | 40.9 | 44.3 | 47.0 |
| Example 9 | 14.3 | 37.4 | 43.5 | 47.0 | 50.9 |
| Example 10 | 15.7 | 40.0 | 47.0 | 50.7 | 54.8 |
| Example 11 | 20.0 | 47.0 | 56.5 | 60.0 | 63.9 |
| Referential Example 1 | 33.4 | 69.1 | 76.9 | 77.8 | 78.7 |
| Referential Example 2 | 36.5 | 72.6 | 79.1 | 80.0 | 80.9 |

[Examples 12 to 23]

Hereinafter, confirmatory experiments were conducted as to effects brought about by a surface treatment on a transparent substrate and an UV-ozone treatment on a functional semiconductor layer.
Specifically, after a surface treatment by one of the following ultrasonic cleaning treatment, etching treatment and UV-ozone treatment, or a combination of two or more thereof was conducted on a surface of the same transparent substrate (ITO/PEN substrate having a sheet resistance of 13 $\Omega/\square$) as that used in Example 1 according to Table 3, the same aqueous paste [1] for formation of photoelectric conversion layer as that obtained in Example 1 was applied on to the surface thereof, the pressing treatment was conducted so as to give a layer thickness shown in Table 3 to form a functional semiconductor layer, an UV-ozone treatment was conducted on this functional semiconductor layer as needed, and a sensitizing dye was then carried, thereby obtaining dye-sensitized solar cells [12] to [23]. With respect to these dye-sensitized solar cells [12] to [23], values of a short-circuit current, a release voltage, a form factor ff and a photoelectric conversion efficiency were obtained in the same manner as in Example 1. The results are shown in Table 3.

(Ultrasonic cleaning treatment)

An ultrasonic cleaner and a detergent for ultrasonic cleaning were used, the transparent substrate was immersed in a container, into which the detergent has been put, the container was placed in the ultrasonic cleaner filled with water, and ultrasonic waves were generated for 10 minutes, thereby washing and removing minute deposits on the surface of the transparent substrate.

(Etching treatment)

After the transparent substrate was set in a high-frequency sputtering apparatus "SVC-700RFII" (manufactured by SANYU ELECTRON CO., LTD.) under high-vacuum conditions (5 Pa), a reverse-sputtering (etching) treatment was conducted under conditions of 20 W and 10 minutes. Specifically, a high-frequency ac voltage was applied, thereby generating plasma, and an argon atom charged with a plus charge in the plasma was caused to collide with the substrate charged with a minus charge, thereby removing the deposits on the substrate.

(UV-ozone treatment)

An object of the treatment was placed in an UV-ozone cleaning apparatus "OC-2506" (manufactured by IWASAKI ELECTRIC CO., LTD.), and the object was irradiated with ultraviolet light for 5 minutes.

[Table 3]

| | Surface treatment on transparent substrate | Surface treatment on functional semiconductor layer | Layer thickness ($\mu$m) | Result | | | | |
|---|---|---|---|---|---|---|---|---|
| | | | | Value of short-circuit current (mA/cm$^2$) | Release voltage (V) | Value of form factor 55 ff | Photoelectric conversion efficiency (%) | |
| Example 12 | Etching treatment | - | 5.3 | 12.9 | 0.77 | 0.73 | 7.2 | |
| Example 13 | Etching treatment | - | 5.6 | 12.8 | 0.75 | 0.74 | 7.2 | |
| Example 14 | UV-ozone treatment | - | 6.3 | 13.2 | 0.74 | 0.74 | 7.2 | |
| Example 15 | UV-ozone treatment | - | 7.3 | 12.8 | 0.76 | 0.75 | 7.3 | |
| Example 16 | UV-ozone treatment | UV-ozone treatment | 6.2 | 13.1 | 0.75 | 0.74 | 7.3 | |
| Example 17 | UV-ozone treatment | UV-ozone treatment | 6.6 | 13.4 | 0.75 | 0.74 | 7.4 | |
| Example 18 | Ultrasonic cleaning treatment→ UV-ozone treatment | UV-ozone treatment | 6.2 | 12.8 | 0.77 | 0.74 | 7.4 | |
| Example 19 | Ultrasonic cleaning treatment→ UV-ozone treatment | UV-ozone treatment | 8.7 | 13.5 | 0.74 | 0.75 | 7.5 | |

(continued)

| | Surface treatment on transparent substrate | Surface treatment on functional semiconductor layer | Layer thickness ($\mu$m) | Result | | | |
|---|---|---|---|---|---|---|---|
| | | | | Value of short-circuit current (mA/cm$^2$) | Release voltage (V) | Value of form factor 55 ff | Photoelectric conversion efficiency (%) |
| Example 20 | UV-ozone treatment$\rightarrow$ Etching treatment | UV-ozone treatment | 8.0 | 13.1 | 0.75 | 0.74 | 7.3 |
| Example 21 | UV-ozone treatment$\rightarrow$ Etching treatment | UV-ozone treatment | 7.0 | 13.4 | 0.75 | 0.76 | 7.6 |
| Example 22 | Etching treatment $\rightarrow$UV-ozone treatment | UV-ozone treatment | 7.9 | 13.1 | 0.76 | 0.74 | 7.4 |
| Example 23 | Etching treatment $\rightarrow$UV-ozone treatment | UV-ozone treatment | 7.7 | 13.2 | 0.75 | 0.75 | 7.4 |

As apparent from Table 3, it was proved that the surface treatment is conducted on the transparent substrate, whereby a photoelectric conversion efficiency as high as 7.2 to 7.6% is achieved, while the photoelectric conversion efficiency in the case where no surface treatment is conducted, for example, in Example 1, is 7.1%. It was also proved that the UV-ozone treatment is conducted on the functional semiconductor layer in addition to the surface treatment on the transparent substrate, whereby a photoelectric conversion efficiency as high as 7.3 to 7.6% is achieved, while the photoelectric conversion efficiency in the case where this treatment is not conducted, for example, in Examples 12 to 15, is 7.2 to 7.3%.

This is presumed to be attributable to the fact that hydrophilic groups of the semiconductor particles contained in the functional semiconductor layer can be increased by the UV-ozone treatment on the functional semiconductor layer, so that the semiconductor particles become easy to adsorb the dye, and consequently the resulting dye-sensitized solar cell achieves a high photoelectric conversion efficiency.

In particular, the UV-ozone treatment conducted as the surface treatment shows a tendency to achieve a high photoelectric conversion efficiency compared with the case where the ultrasonic cleaning treatment or etching treatment is conducted. The reason for it is considered to be attributable to the fact that ozone generated by ultraviolet light decomposes and removes organic pollutants on the surface of the object of the treatment, and moreover active oxygen from the ozone is bonded to surface molecules to increase the hydrophilicity of the surface of the object of the treatment, whereby the contact angle of water is greatly reduced compared with that before the surface treatment, and consequently the adhesion of the aqueous paste to the transparent substrate is increased.

[Examples 24 and 25]

Dye-sensitized solar cells [24] and [25] were fabricated in the same manner as in Example 1 except that an UV-ozone treatment was conducted on the functional semiconductor layer after the pressing treatment and before the dye-carrying step, and a mixed solvent containing acetonitrile and t-butyl alcohol at a weight ratio of 1:1 was used as the solvent used in the dye-carrying step. The layer thicknesses of the functional semiconductor layers making up these dye-sensitized solar cells [24] and [25] were 7.6 $\mu$m and 8.1 $\mu$m. respectively. These dye-sensitized solar cells [24] and [25] were used to obtain values of a short-circuit current, a release voltage, a form factor ff and a photoelectric conversion efficiency were obtained in the same manner as in Example 1. The results are shown in Table 4.

[Table 4]

|  | Layer thickness (μm) | Result | | | |
|---|---|---|---|---|---|
|  |  | Value of short-circuit current (mA/cm$^2$) | Release voltage (V) | Value of form factor 55 ff | Photoelectric conversion efficiency (%) |
| Example 24 | 7.6 | 13.0 | 0.75 | 0.74 | 7.2 |
| Example 25 | 8.1 | 13.0 | 0.78 | 0.73 | 7.3 |

As apparent from Table 4, it was confirmed that the UV-ozone treatment is conducted on the functional semiconductor layer after the pressing treatment, whereby the performance of the resulting dye-sensitized solar cell can be improved.

[Example 26]

Hereinafter, it was proved that the dye-sensitized solar cell according to the present invention can retain a high level of photoelectric conversion efficiency even when the quantity of incident light is changed.
Specifically, a dye-sensitized solar cell fabricated in the same manner as in Example 1 was used, and the quantity of incident light was changed within a range of 20 to 200 mW/cm$^2$ to measure a photoelectric conversion efficiency when the quantity of incident light was controlled to 23 mW/cm$^2$, 48.5 mW/cm$^2$, 70 mW/cm$^2$, 100 mW/cm$^2$ or 170 mW/cm$^2$. The results are shown in Table 5.
[Table 5]

| Quantity of incident light (mW/cm$^2$) | 23 | 48.5 | 70 | 100 | 170 |
|---|---|---|---|---|---|
| Value of short-circuit (mA/cm$^2$) current | 2.7 | 5.9 | 8.7 | 12.9 | 21.8 |
| Photoelectic conversion effciency (%) | 6.2 | 6.6 | 6.9 | 7.1 | 7 |

As apparent from Table 5, it was confirmed that a high-level of photoelectric conversion efficiency of 6.2 to 7.1% can be retained even when the quantity of incident light is changed within a range of 23 to 170 mW/cm$^2$. It was also proved that the short-circuit current tends to increase in proportion to the quantity of incident light.

[Example 27]

A dye-sensitized solar cell [19] fabricated by using a surface-treated transparent substrate formed in the same manner as in Example 19 and subjecting the functional semiconductor layer after the pressing treatment to the UV-ozone treatment was used, and the quantity of incident light was changed within a range of 20 to 200 mW/cm$^2$ to measure a photoelectric conversion efficiency when the quantity of incident light was controlled to 20.9 mW/cm$^2$, 31.4 mW/cm$^2$, 46.0 mW/cm$^2$, 69.0 mW/cm$^2$, 100 mW/cm$^2$ or 170 mW/cm$^2$. The results are shown in Table 6.
[Table 6]

| Quantity of incident light (mW/cm$^2$) | 20.9 | 31.4 | 46.0 | 69.0 | 100.0 | 170.0 |
|---|---|---|---|---|---|---|
| Value of short-circuit (mA/cm$^2$) current | 2.8 | 4.1 | 5.9 | 8.7 | 12.8 | 21.7 |
| Photoelectic conversion (%) efficiency | 6.9 | 7.1 | 7.1 | 7.1 | 7.4 | 7.1 |

As apparent from Table 6, it was confirmed that a high-level of photoelectric conversion efficiency of 6.9 to 7.4% can be retained even when the quantity of incident light is changed within a range of 20.9 to 170 mW/cm$^2$. It was also proved that the short-circuit current tends to increase in proportion to the quantity of incident light. In addition, a higher-level of photoelectric conversion efficiency was achieved compared with a dye-sensitized solar cell obtained without subjecting the transparent substrate and the functional semiconductor layer to the surface treatment.

**Claims**

1. A production process of a photoelectrode for dye-sensitized solar cell, which comprises forming a transparent conductive layer on a transparent base to provide a transparent substrate and laminating a photoelectric conversion layer on the transparent conductive layer of the transparent substrate, wherein
the photoelectric conversion layer contains at least two kinds of semiconductor particles different in average particle diameter from each other and a sensitizing dye, and
the process comprises a step of subjecting a coating film formed on the transparent conductive layer with an aqueous paste containing neither a binder nor an organic solvent and containing said at least two kinds of semiconductor particles different in average particle diameter to a pressing treatment.

2. The production process according to claim 1, wherein the surface of the transparent conductive layer of the transparent substrate is subjected to an ultrasonic cleaning treatment, an etching treatment and/or an UV-ozone treatment.

3. The production process according to claim 2, wherein the photoelectric conversion layer is obtained by subjecting the coating film of the aqueous paste to the pressing treatment to provide a functional semiconductor layer and carrying the sensitizing dye on the functional semiconductor layer.

4. The production process according to claim 3, wherein the pressing treatment is conducted under conditions that the light transmittance of the functional semiconductor layer at a wavelength of 400 to 800 nm reaches 110 to 130% of a value before the pressing treatment.

5. The production process according to claim 1 or 2, wherein the photoelectric conversion layer is obtained by forming one or more coating layers of an aqueous paste containing neither a binder nor an organic solvent and containing at least two kinds of semiconductor particles different in average particle diameter from each other on the layer obtained by subjecting the coating film of the aqueous paste to the pressing treatment to provide a functional semiconductor layer and carrying the sensitizing dye on the functional semiconductor layer.

6. The production process according to claim 5, wherein the pressing treatment is conducted under conditions that the light transmittance of the layer obtained by subjecting the coating film of the aqueous paste to the pressing treatment at a wavelength of 400 to 800 nm reaches 110 to 130% of a value before the pressing treatment.

7. The production process according to any one of claims 3 to 6, wherein the functional semiconductor layer obtained through the step of subjecting the coating film of the aqueous paste to the pressing treatment is subjected to an UV-ozone treatment before carrying the sensitizing dye.

8. The production process according to claim 1 or 2, wherein the photoelectric conversion layer is composed of a sensitizing dye-carried and pressed semiconductor layer obtained by carrying the sensitizing dye on the coating film of the aqueous paste and then conducting the pressing treatment.

9. The production process according to claim 8, wherein the pressing treatment is conducted under conditions that the light transmittance of the sensitizing dye-carried and pressed semiconductor layer at a wavelength of 400 to 800 nm reaches 110 to 130% of a value before the pressing treatment.

10. The production process according to any one of claims 1 to 9, wherein the semiconductor particles are anatase crystal type titania particles.

11. The production process according to any one of claims 1 to 10, wherein the semiconductor particles are obtained by a basic process.

12. The production process according to claim 11, wherein the basic process comprises a step of hydrolyzing a semiconductor metal alkoxide with a quaternary ammonium salt.

13. The production process according to any one of claims 1 to 12, wherein the content of said at least two kinds of semiconductor particles different in average particle diameter in the aqueous paste is 5 to 30% by mass.

14. The production process according to any one of claims 1 to 13, wherein the semiconductor particles contained in the aqueous paste are two kinds of particles having an average particle diameter of 3 to 40 nm and an average particle diameter of 50 nm or greater.

15. The production process according to any one of claims 1 to 14, wherein the pressing treatment is conducted at room temperature.

16. The production process according to any one of claims 1 to 15, wherein the pressing treatment is conducted under a pressure of from 5 MPa or higher to 500 MPa or lower.

17. The production process according to any one of claims 1 to 16, wherein the transparent base of the transparent substrate is a plastic transparent base.

18. The production process according to claim 17, wherein a transparent conductive layer composed of indium-tin composite oxide (ITO) is formed on the plastic transparent base by a sputtering method while conducting a heat treatment at a temperature lower than the heat-resistant temperature of the transparent base.

19. A photoelectrode for dye-sensitized solar cell, which is obtained by forming a transparent conductive layer on a transparent base to provide a transparent substrate, providing a functional semiconductor layer on the transparent conductive layer of the transparent substrate, and carrying a sensitizing dye on the functional semiconductor layer of the thus-obtained photoelectrode structure, wherein
the functional semiconductor layer has a pressed layer in a state contacted with the transparent conductive layer, and the pressed layer contains at least two kinds of semiconductor particles different in average particle diameter from each other and contains no binder.

20. The photoelectrode for dye-sensitized solar cell according to claim 19, wherein said at least two kinds of semiconductor particles different in average particle diameter are two kinds of semiconductor particles having an average particle diameter of 3 to 40 nm and an average particle diameter of 50 nm or greater.

21. The photoelectrode for dye-sensitized solar cell according to claim 20, wherein the content of the semiconductor particles having the average particle diameter of 3 to 40 nm in said at least two kinds of semiconductor particles different in average particle diameter is 50 to 95% by mass.

22. The photoelectrode for dye-sensitized solar cell according to any one of claims 19 to 21, wherein the functional semiconductor layer of the photoelectrode structure is of a multilayer structure of the pressed layer and at least one layer laminated on the pressed layer, containing at least two kinds of semiconductor particles different in average particle diameter from each other, containing no binder and subjected to no pressing treatment.

23. The photoelectrode for dye-sensitized solar cell according to any one of claims 19 to 22, wherein the thickness of the pressed layer of the functional semiconductor layer is 3 to 40 $\mu$m.

24. The photoelectrode for dye-sensitized solar cell according to any one of claims 19 to 23, wherein the pressed layer of the functional semiconductor layer bears traces of cracks filled.

25. The photoelectrode for dye-sensitized solar cell according to any one of claims 19 to 24, wherein the light transmittances of a laminate of the transparent substrate and the pressed layer of the functional semiconductor layer in the photoelectrode structure at a wavelength of 500 nm and at a wavelength of 700 nm are 20 to 65% and 30 to 75%, respectively.

26. A dye-sensitized solar cell comprising the photoelectrode for dye-sensitized solar cell according to any one of claims 19 to 25, wherein
the photoelectrode for dye-sensitized solar cell is provided so as to oppose to a counter electrode through an electrolyte part.

F i g . 1

F i g . 2

(a)

(b)

(c)

(d)

F i g . 3

# Fig. 4

(a)

23B
21b
21
21a

(b)

23C ⎤ 23β
23B ⎦
20L
21b
21
21a

(c)

26
21b
21
21a

# Fig. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006019072 A

- JP 2004214129 A

**Non-patent literature cited in the description**

- *Nature,* 1991, vol. 353, 737-740